# EUROPEAN PATENT APPLICATION

(11) **EP 1 439 662 A1**
(43) Date of publication of application: **21.07.2004**
(21) Application number: 02802035.2
(22) Date of filing: 21.10.2002
(51) Int. Cl.: H04L 9/32

(54) **INFORMATION PROCESSING APPARATUS**

(30) Priority: 23.10.2001 JP 2001324335
(71) Applicant: MATSUSHITA ELECTRIC INDUSTRIAL CO., LTD., Kadoma-shi, Osaka 571-8501 (JP)
(72) Inventor: TSUKAMOTO, Yoshihiro, Ota-ku, Tokyo 144-0046 (JP); SUGIURA, Masataka, Setagaya-ku, Tokyo 158-0082 (JP); HATANO, Kouji, Tokyo 108-0073 (JP); TAKAHASHI, Eiji, Suginami-ku, Tokyo 166-0014 (JP)
(74) Representative: Betten & Resch
(86) International application number: PCT/JP2002/010875
(87) International publication number: WO 2003/036866

(57) **Abstract**

It is an object of the invention to reuse the available part of data in cases where data is determined not to be authentic. The input section inputs the data, and the processing section generates the processed data. According to the generation of the processed data, the authentication data generation section generates the authentication data for authenticating the processed data and the output section outputs the data with authentication wherein the processed data is correlated with the authentication data. By including the data inputted into the processed data, even if the processed data cannot be authenticated, a process can be performed by using the data as long as the authenticity of the data can be guaranteed. Moreover, it becomes possible to specify a flexible process by including the status return information in the processed data required for the process in the case where the authenticity cannot be affirmed.

## Description

### BACKGROUND OF THE INVENTION

### Field of the Invention

The present invention relates to data processing. Particularly, it relates to data processing with authentication indicating the authenticity of data.

### Description of the Prior Art

Conventionally, a "signature" has been used as a method of checking the authenticity of data transmitted by a communicating party. A signature is acquired by calculating a digest that characterizes data using a digest function such as MD 5 (refer to RFC1321) for the data, and is acquired by encrypting the digest. A person who receives the data and its signature can determine whether or not such data is authentic by determining whether or not such data has been acquired by the digest function and encryption.

A "certificate" of SSL (Secure Socket Layer) used in order to preserve secure communications between browsers and servers can serve as an example of a signature. This certificate proves the validity of the public key for a communicating party, and is comprised of a subject as a target of a public key, the name of the issuer of the certificate, a public key, validity, and other relevant information. Additionally, a signature showing that such information is valid, made by a CA (Certificate Authority) is included. Such certificate is used so as to determine whether or not a public key transmitted by a communicating party is authentic.

However, in a communication method using a conventional signature, if the authenticity of data can not be verified by a signature, all the data is abandoned and retransmission is made, without reusing the available part of such data. This causes an increase in the number of communications. Additionally, if the data is not authenticated by a signature, a designation to perform a dynamic process according to data can not be made.

### SUMMARY OF THE INVENTION

In order to resolve the above deficiencies in the present invention, first, a processing unit, processing inputted data and a signature for the processed data (hereinafter referred to as "authentication data"), according to the generation of the processed data in the processing unit, are generated. Moreover, an information processing apparatus to correlate the processed data with authentication data and to output such data is provided. Additionally, the processed data may be data that shows the completion of a process. Based on this, a result of the process by the information processing apparatus can be recognized by checking the authentication data output by the information processing apparatus.

In such case, the data inputted into the information processing apparatus may be data correlated with the authentication data. Additionally, the authenticity of the inputted data may be ascertained by using the correlated authentication data with the data inputted into the information processing apparatus. Based on this, if processes are made in multiple stages, the result of the processes up to the previous stage can be recognized.

Secondly, regarding the processed data, the processing section may be activated so as to include the inputted data. Based on this, a history for the performance of processes can be included in the processed data. If the result of processes is determined as being unauthentic, the processes will not be resumed from the beginning. However, the processor can be undertaken from the authentic part of the result of the processes. Thus, this does not require redundant processes, and the number of communications can also be reduced.

Thirdly, the status return information, which is required for processes of the case where the processed data is determined to be unauthentic by the authentication data, may be included in the processed data. Therefore it becomes possible for the process to be dynamically specified in cases where the processed data is determined to be unauthentic.

Fourthly, in cases where the processed data is determined to be unauthentic by the authentication data, based on the authentication data correlated with the inputted data at the previous processing stage, it is determined whether or not the inputted data is authentic. Thereby it becomes possible to trace the history of processes, and to resume the subsequent process which has been properly terminated.

Fifthly, in cases where the processed data is determined to be unauthentic by the authentication data, it is determined whether or not the inputted data is authentic based on the authentication data correlated with the inputted data at the previous processing stage. In cases where the data is determined to be authentic, the process is performed based on the status return information included in the inputted data. Thereby it becomes possible to trace the history of processes, and to dynamically specify the process necessary to execute a correct process.

### BRIEF DESCRIPTION OF THE DRAWINGS

Fig. 1 is a functional block diagram of the information processing apparatus in the first embodiment of the present invention.
Fig. 2 is another functional block diagram of the information processing apparatus in the first embodiment of the present invention.
Fig. 3 is a schematic view of the generation of the authentication data based on the processed data.
Fig. 4 is a flow chart of the processes of the information processing apparatus in the first embodiment of the present invention.
Fig. 5 is an illustration of a use of the information processing apparatus in a first embodiment of the present invention.
Fig. 6 is a flow chart of the process of a gate control apparatus.
Fig. 7 is another functional block diagram of the information processing apparatus in the first embodiment of the present invention.
Fig. 8 is an illustration of a use of the information processing apparatus in the first embodiment of the present invention.
Fig. 9 is an illustration of a use of the information processing apparatus in the second embodiment of the present invention.
Fig. 10 is a sequential diagram of a use of the second embodiment of the present invention.
Fig. 11 is an illustration of a use wherein a multistage process is performed among the information processing apparatuses in the second embodiment of the present invention.
Fig. 12 is a functional block diagram of the information processing apparatus in the third embodiment of the present invention.
Fig. 13 is a flow chart of the processes of the information processing apparatus in the third embodiment of the present invention.
Fig. 14 is an illustration of a use of the information processing apparatus in the third embodiment of the present invention.
Fig. 15 is an illustration of data inputted and output among the information processing apparatuses in the fourth embodiment of the present invention.
Fig. 16 is an illustration of operations of an output section in the fourth embodiment of the present invention.
Fig. 17 is a schematic view of the fifth embodiment of the present invention.
Fig. 18 is a schematic view of the fifth embodiment of the present invention.
Fig. 19 is a flow chart of the processes of the information processing apparatus in the fifth embodiment of the present invention.
Fig. 20 is a flow chart of the processes of the information processing apparatus in the fifth embodiment of the present invention.
Fig. 21 is an illustration of the data used in the information processing apparatus in the fifth embodiment of the present invention.

### DETAILED DESCRIPTION OF THE PREFERRED EMBODIMENTS

Hereinafter, the embodiments of the present invention will be described with the use of drawings. The present invention shall not be restricted to the embodiments to be described, and may be embodied in various forms without departing from the essential characteristics thereof.

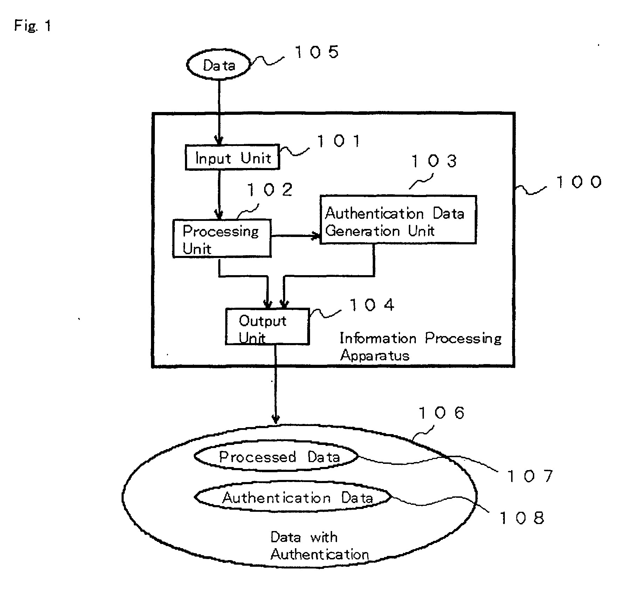

Fig. 1 is a functional block diagram of the information processing apparatus of the first embodiment of the present invention. In Fig. 1, an information processing apparatus 100 comprises an input section 101, a processing section 102, an authentication data generation section 103, and an output section 104.

The input section 101 inputs the data 105. In the present invention, the term "data" corresponds to that expressed by digital information. Examples of data include slip data, ticket data etc. The input section 101 communicates the inputted data to the processing section 102.

The processing section 102 processes the data inputted in the input section 101 and generates the processed data. Examples of the processed data include slip data including the total amount stored in slip data, and the data indicating a result of a determination regarding the validity of the ticket data. The processing section 102 passes the processed data onto the authentication data generation section 103 and the output section 104.

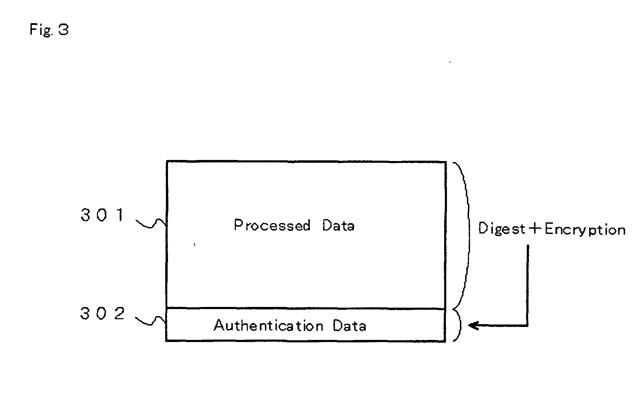

The authentication data generation section 103 generates the authentication data so as to verify the authenticity of the processed data according to the generation of the processed data in the processing section 102. "According to the generation of the processed data," corresponds to "based on the processed data at the point of generation of the processed data by the processing section 102", so that the authentication data may be generated in parallel with the generation of the processed data, or may be generated after the generation of the processed data is completed. The "authentication data" corresponds to the data for verifying the authenticity of the processed data. "Authenticity of the processed data" corresponds to that the processed data has been generated in the processing section 102 of the information processing apparatus 100. As illustrated in Fig. 3, an example of the authentication data includes a digest of the processed data 301, and generation of the authentication data 302 based on the result of the encryption of the digest. "To digest the processed data 301" is to coordinate to a different value, or a value as different as possible from that of the different processed data. An algorithm for such is known as Message Digest 5 (an algorithm defined as RFC1321, and hereinafter abbreviated as "MD5"). Regarding such MD5, 128-bit data is allocated to the data in the variable-length bit field. Regarding MD5, when the value "a" of 128-bit against data A is acquired, it is considered to be virtually impossible to acquire data B, which is different from A, by using value "a", and which is acquired by MD5. Regarding a method of encryption, public key cryptography is known, and, a result of digest is encrypted by a private key. This enables a person who receives the processed data 301 and the authentication data 302 to verify the authenticity of the processed data 301 based on whether or not the result, when the authentication data 302 is decrypted by a public key responding to a private key and the result of digest for the processed data 301, is equal. Additionally, even without using public key cryptography, a result of digest may be encrypted through a common key by using common key cryptography, and the authentication data may be decrypted through such a common key. Additionally, it may be acceptable to check if the digest of the processed data 301 is encrypted through a common key and becomes equal to the authentication data.

The output section 104 outputs the data with authentication correlating the processed data with the authentication data. That is, the data generated in the processing section 102 and the authentication data generated in the authentication data generation section 103 are correlated, and the data with authentication 106 including the processed data 107 and the authentication data 108 illustrated in Fig. 1 are outputted. In such case, the processed data 107 is the data resulting when the data 105 is processed and generated in the processing section 102, and the authentication data 108 is the data generated in the authentication data generation section 103 according to the generation of the processed data 107 in the processing section 102.

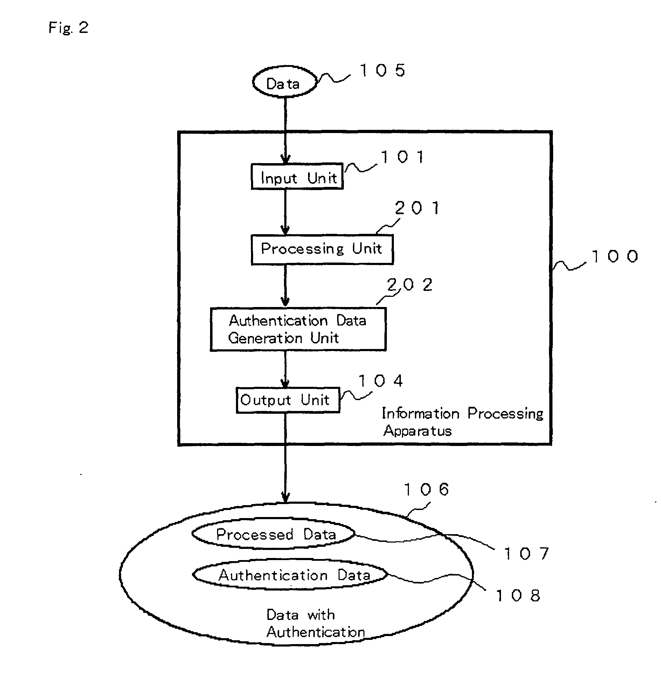

In addition, Fig. 1 describes that the processing section 102 would pass the processed data to the authentication data generation section 103 and the output section 104. On the other hand, the processing section 201 and the authentication data generation section 202 may be connected serially. The processing section 201 generates the processed data by processing the data inputted in the input section 101 in the same manner as the processing section 102, and the authentication data generation section 202 generates the authentication data so as to guarantee the authenticity of the processed data according to the generation of the processed data in the processing section 201. The difference between Fig. 1 and Fig. 2 is that the processing section 201 communicates the processed data to the authentication data generation section 202 and the authentication data generation section 202 receives the processed data from the processing section 201. The authentication data is generated according to such reception, and the processed data and authentication data are passed to the output section 104.

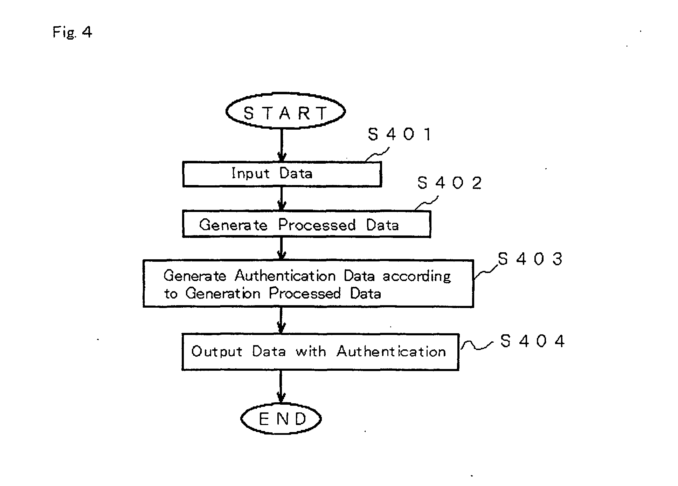

Fig. 4 is a flow chart explaining the processes of the information processing apparatus 100. In step S401, data is inputted. Therefore, this step causes the input section 101 to input data.

In step S402, the processed data is generated. Therefore, this step causes the processing section 102 to process the data inputted into the input section 101, and to generate the processed data.

In step S403, according to the generation of the processed data, the authentication data is generated. Therefore, this step causes the authentication data generation section 103 to generate the authentication data so as to guarantee the authenticity of the processed data according to the generation of the processed data in the processing section 102.

In step S404, the authentication data is outputted. Therefore, this step causes the output section 104 to output the data with authentication, which is the data correlating the processed data with the authentication data.

In addition, Fig. 4 describes that step S403 would be executed after step S402 is completed. However, it is also possible to execute step S402 and step S403 in a parallel manner, by causing the processing section 102 and the authentication data generation section 103 to be activated in a parallel manner.

Additionally, Fig. 4 can be considered to be a flow chart for the information processing program which causes a computer to execute each step of the case where the information processing apparatus 100 is operated by the computer. Step S401 is the input step to acquire the inputted data. Step S402 is the processing step to process the data acquired in step S401 as an input step, and to generate the processed data. Step S403 is the authentication data generation step to generate the authentication data so as to guarantee the authenticity of the processed data according to the generation of the processed data in step S402 as a processing step. Step S404 is an output step to output the data with authentication correlating the processed data with the authentication data.

Additionally, Fig. 4, which can be considered to be a flow chart, is an information processing program causing a computer to execute each step of a case where the information processing apparatus 100 is operated by the computer. Step S401 is the input step to acquire the inputted data. Step S402 is the processing step to process the data acquired in step S401 as an input step, and to generate the processed data. Step S403 is the authentication data generation step to generate the authentication data so as to verify the authenticity of the processed data according to the generation of the processed data in step S402 as a processing step. Step S404 is an output step to output the data with authentication that correlates the processed data with the authentication data.

Additionally, Fig. 4 can be deemed to be a flow chart explaining the use of an information processing method comprising an output step, a processing step, an authentication data generation step, and an output step. The information processing apparatus 100 can be considered to be a section used for such an information processing method.

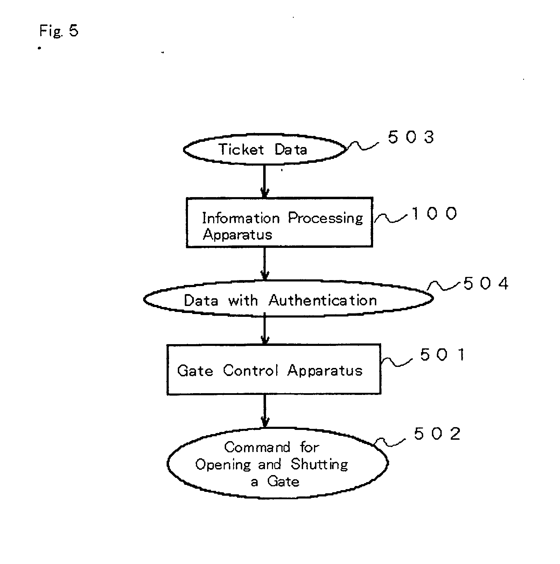

Fig. 5 shows an example of a pattern of use of the information processing apparatus 100 in the embodiment of the present invention. Fig. 5 shows a functional block diagram of the interior of an automatic ticket gate, and indicates the information processing apparatus 100 and the gate control section 501. The ticket data 503 recorded in the magnetic part of the reverse side of a ticket, etc. as the data is inputted into the information processing apparatus 100. The processing section 102 generates the processed data of the result of the determination, resulting from the determination as to whether the ticket data 503 is valid or invalid, for example, whether the ticket validity period has expired or not, or whether the ticket has been already used or not. The authentication data generation section 103 generates the authentication data of the result of determination. The output section 104 outputs the data with authentication 504, which correlates the result of determination with the data with authentication 504. The data with authentication 504 is inputted into the gate control section 501. The authenticity of the result of determination is verified according to the authentication data regarding the data with authentication 504, and if the authenticity is affirmed, and the result of determination is "available," a command for opening a gate is outputted as the command for opening and shutting the gate 502. If the authenticity is not affirmed, and the result of determination is "not available," a command for keeping the gate shut is outputted as the command for opening and shutting the gate 502.

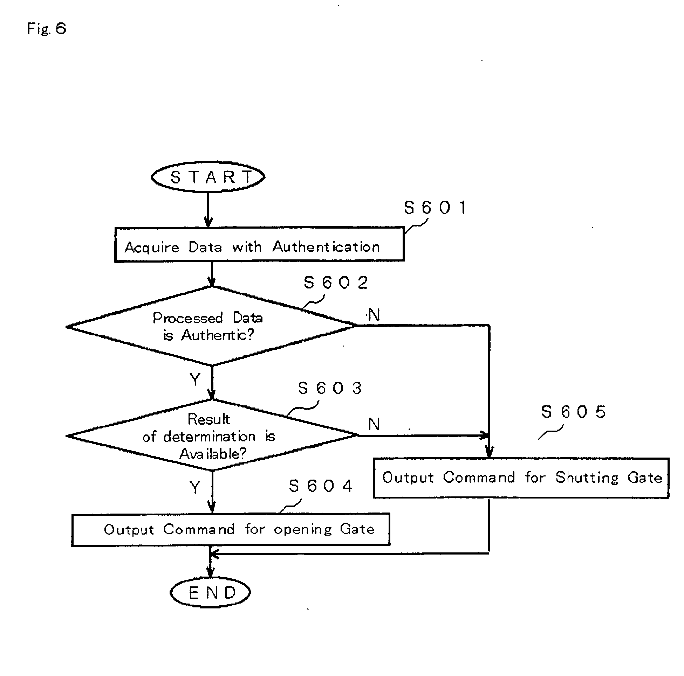

Fig. 6 is a flow chart explaining the processes of the gate control section 501. In step S601, the data with authentication 504 is acquired.

In step S602, whether or not the processed data, that is a result of determination, is authentic is determined by using the authentication data. This is to say, if the authenticity is determined and the authenticity is affirmed, the process moves to step S603. If it is not (if denied), the process moves to step S605.

In step 603, it is determined whether or not a result of determination is "available. " If "available, " the process moves to step S604, and a command for opening a gate is outputted as the command for opening and shutting the gate 502. In step S603, if determined as "not available," the process proceeds to step S605.

If authenticity of the processed data as a result of determination is not affirmed, or if a result of determination is determined as "not available," the control of process is moved to the step 605. Thus, a command for keeping a gate shut is outputted as a command for opening and shutting the gate 502.

As such, by using the information processing apparatus 100 and gate control section 501, the gate control section 501 may perform the process based on the data with authentication 504, and it will not become necessary to determine the availability of the ticket data. Additionally, the structure of gate control section 501 is simplified, and the modularity of the section composed of the automatic ticket gate is also enhanced.

In addition, in Fig. 5, the information processing apparatus 100 may output the data with authentication 504 whose authenticity is not affirmed by the gate control unit, when the ticket data 503 that will be inputted is determined as not available. In this way, the gate control section 501 may determine whether the processed data in step S602 is authentic or not, which enables the determination of step S603 to be omitted, thereby simplifying the gate control section 501.

Additionally, the processed data generated by the processing section 102 in Fig. 1 may be the data showing the completion of the process in the processing section 102. In such case, the authentication data generation section 103 generates the verified data so as to guarantee the authenticity of the data showing the completion of a process. The output section 104 outputs the data correlating the data showing the completion of the process with the authentication data.

The description of preferred embodiments where the processed data becomes the data showing the completion of the processing section 102 will be described hereinafter. The information processing apparatus in Fig. 5 transmits the data showing the completion of the process for the generation of a result of determination indicating that the ticket data 503 is "valid", and the authentication data guaranteeing the authenticity of the data indicating completion of determination to the section that counts the number of attendants. The section that counts the number of attendants receives the data with authentication from the information processing apparatus 100, and increases the number of attendants by only one number if the authenticity thereof is affirmed. Alternatively, the gate control section 501 becomes the information processing apparatus where the data with authentication 504 is acquired by the gate control section 501, and determination is made as to the authenticity of the result of the determination, and as to the "validity" of the result of determination. When the gate control section 501 outputs the command to open the gate, the data showing the completion of the outputting of the command to open the gate and the authentication data so as to guarantee the authenticity of the data may be transmitted into the section which counts the number of attendants.

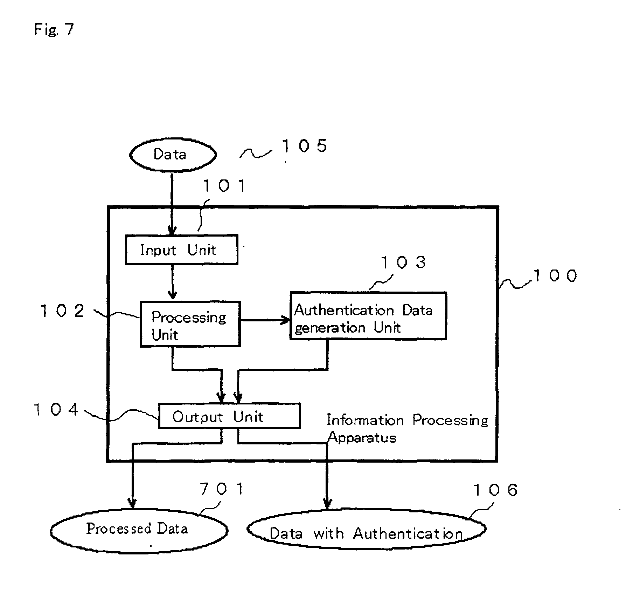

Additionally, the output section in the information processing apparatus 100 may output the processed data separately from the data with authentication 106. Fig. 7 illustrates a functional block diagram of such case. The output section 104 receives the processed data and the authentication data that are generated in the processing section 102 and authentication data generation section 103, and outputs the processed data 701 and the data with authentication 106. In such case, the data with authentication 106 may be the data correlating the processed data 701 with the authentication data so as to guarantee the authenticity thereof. Additionally, the authentication data generation section 103 generates the authentication data so as to guarantee the authenticity for the data showing the completion of the process in the processing section 102, and the data with authentication 106 may be the data correlating the data showing the completion of the in the processing section 102 with the authentication data so as to guarantee the authenticity thereof.

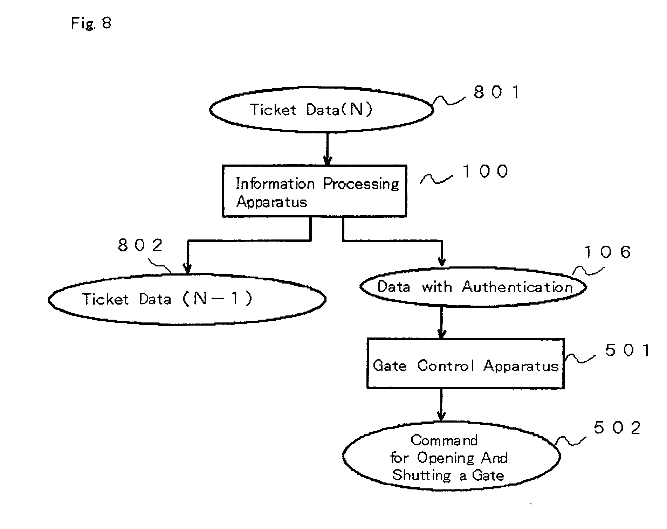

Fig. 8 shows a functional block diagram of an automatic ticket gate as an example of a form of use of the information processing apparatus 100 shown in Fig. 7. In Fig. 8, denoted as "(N)," the ticket data 801 is the data for commutation coupons, which can be used N time(s). The information processing apparatus performs the process to determine the validity of the ticket data 801, and outputs the data with authentication 106 concerning the determination of validity in the same manner as in Fig. 5. Moreover, the information processing apparatus 100 outputs the ticket data 802 as the processed data, and denoted as "(N-1)", the data for commutation coupons, which can be used N-1 time(s). Entering such processed data in the magnetic part of the reverse side of a ticket results in a ticket whose number of possible uses has decreased by one.

As such, in the information processing apparatus, the section which acquires the outputted data with authentication by outputting the data with authentication correlating the processed data with the authentication data, may confirm the authenticity of the processed data through the authentication data of the data with authentication, thereby simplifying the structure and enhancing the modularity of the unit. These effects may be acquired in the same manner, even if the processed data shows the completion of the process.

In embodiment I, preferably, the input section 101 in the information processing apparatus 100 may input the data with authentication as the data.

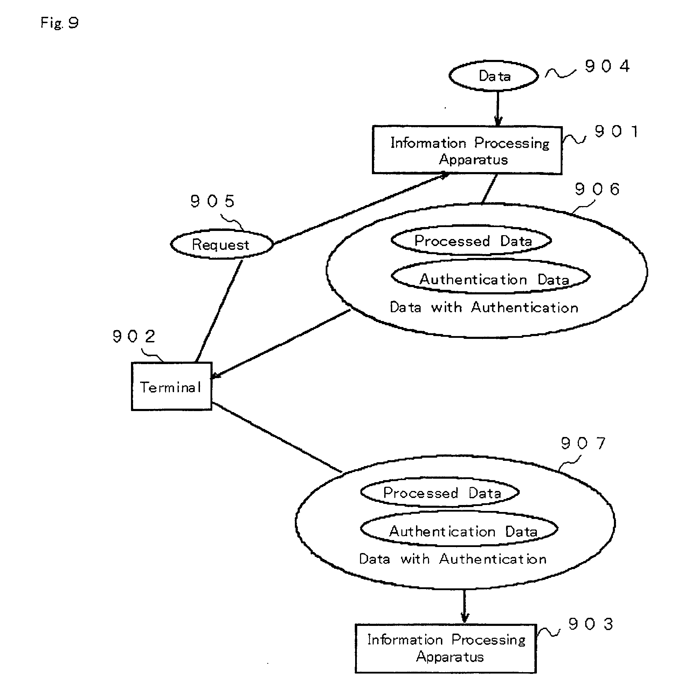

Fig. 9 illustrates the form of use for the information processing apparatus inputting the data with authentication as the data. Fig. 9 shows the information processing apparatus 901, terminal 902, and information processing apparatus 903. The information processing apparatus 901 acquires the data 904. Additionally, the information processing apparatus 901 performs a process concerning the data 904, according to the request 905 transmitted by the terminal 902. As a result of this, the data with authentication 906 is transmitted to the terminal 902. When the terminal 902 receives the data with authentication 906, such terminal transmits such data as the data with authentication 907 to the information processing apparatus 903. At this time, the terminal may transmit such data as the data with authentication 907 without adding any alteration to the data with authentication data received from the information processing apparatus 901, or may transmit such data after some processes are conducted relevant thereto. The input section of the information processing apparatus 903 inputs the data with authentication 907 transmitted from the terminal 902 as data.

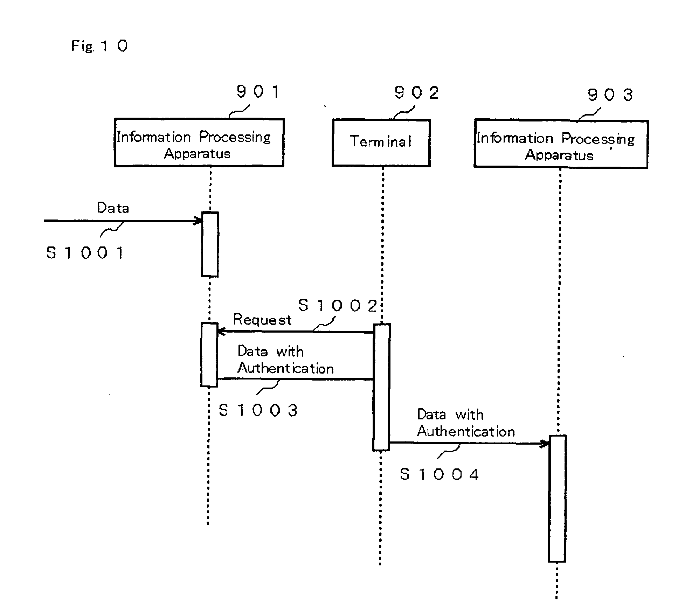

Fig. 10 is a sequential diagram indicating the relationship of the transmission and reception between the information processing apparatus 901, the terminal 902 and the information processing apparatus 903. In step S1001, the information processing apparatus 901 acquires the data 904. In step S1002, a request is transmitted from the terminal 902 to the information processing apparatus 901. According to this, in step S1003, the data with authentication is transmitted from the information processing apparatus 901 to the terminal 902. In step S1004, the data.with authentication is transmitted from the terminal to the information processing apparatus 903. In Fig. 10, the terminal 902 and information processing apparatus 903 comprise the information processing apparatus to which the input section inputs the data with authentication.

As such, the input section inputs the data with authentication as data, thereby enabling a multistage process via the terminal. Moreover, by operating the terminal, in becomes possible to transmit to the information processing apparatus, selected according to the data with authentication which has been received.

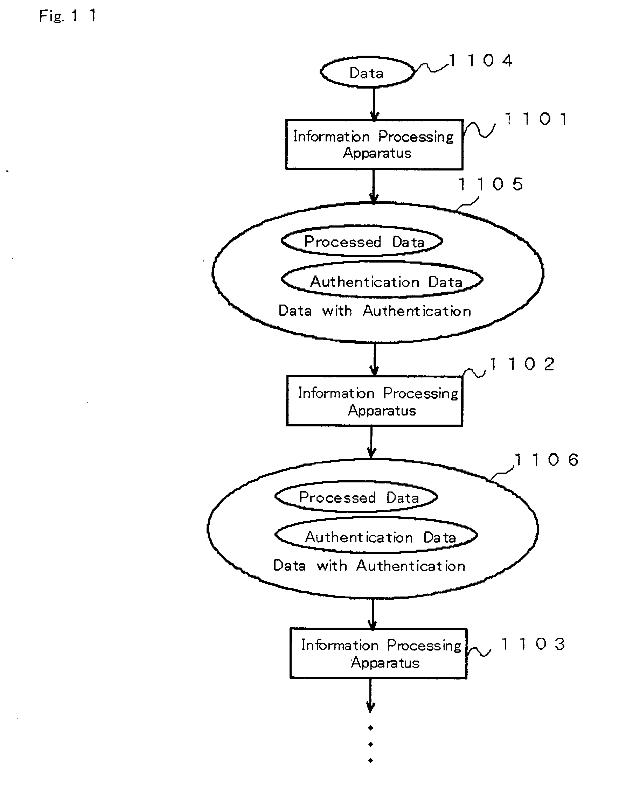

Fig. 11 illustrates a case where a process can be performed in a multistage manner among information processing apparatuses not via the terminal. The information processing apparatus 1101 receives the data 1104, performs the process, outputs the data with authentication 1105, and inputs such data into the information processing apparatus 1102. The information processing apparatus 1102 processes the data with authentication 1105, outputs the data with authentication 1106, and inputs such data into the information processing apparatus 1103. In Fig. 11, after the information processing apparatus 1102, the input section inputs the data with authentication.

As such, the input section inputs the data with authentication, thereby enabling a process to be performed in a multistage manner. Additionally, when a multistage process is performed within the same unit, the procedure of authorization at each processing stage, to confirm the authenticity of the data, can be omitted. Moreover, when a multistage process is performed among a plurality of units, the procedure of authorization of data performed among the units at every transmission and reception of data can be omitted.

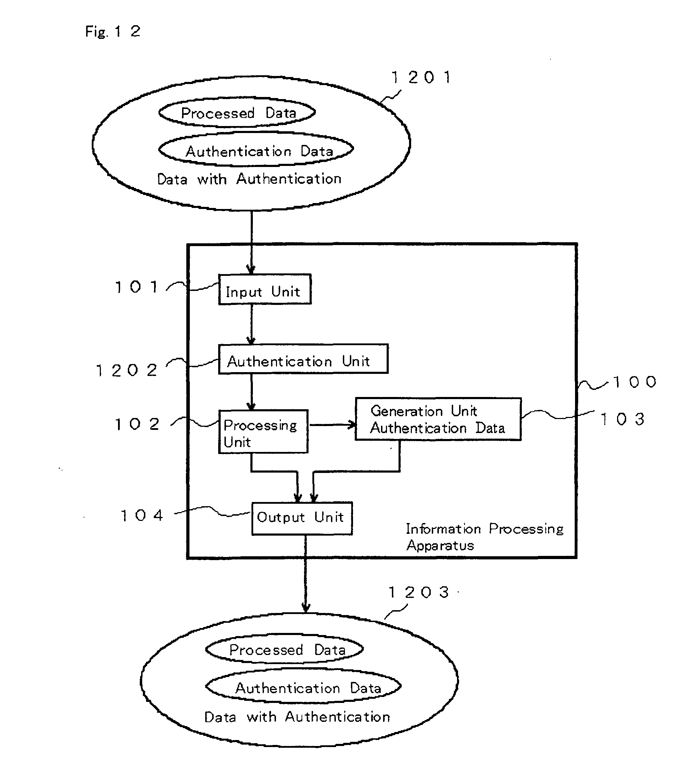

Fig. 12 shows a functional block diagram of the information processing apparatus in the embodiment 3. Preferably, the authentication section 1202 is added to the information processing apparatus of embodiment 2.

The authentication section 1202 verifies the authenticity of the inputted data with authentication based on the authentication data of the data with authentication, which is inputted into the input section 101. The data and authentication data are extracted from the data with authentication 1201, which is inputted into the input section 101. The method of authentication is based on embodiment 1. Additionally, determination is made based on whether the result of digest for the data and the result acquired by the decrypting of the authentication data, which has been encrypted, matches, or whether the result of digest for the data is the same as the data where the authentication data is decrypted by a common key. Alternatively, when using common key cryptography, the result of digest for the data may be determined based on whether or not that which has been encrypted by common key cryptography is the same as the authentication data.

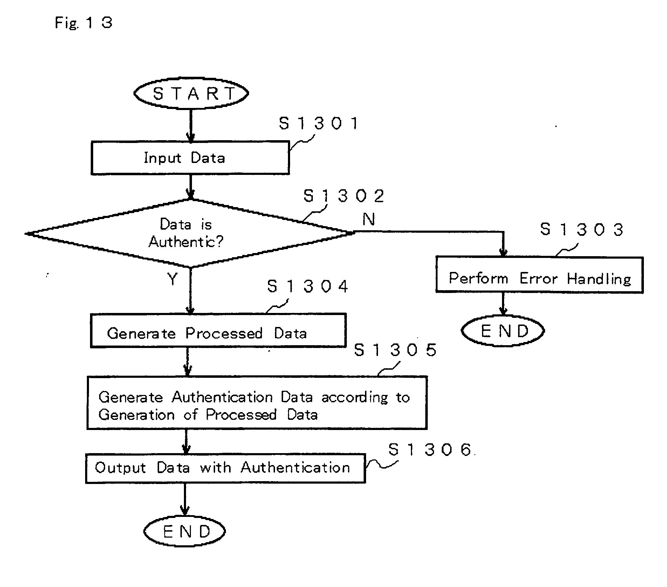

Fig. 13 is a flow chart to explain the process of the information processing apparatus 100 in the preferred embodiments of the present invention. In step S1301, the data is inputted.

In step S1302, it is determined whether or not the data is authentic. If such data is determined to be unauthentic, the process proceeds to step S1303, error-handling is performed, and the process is finished.

In step S1302, if data is determined to be authentic, the process proceeds to step S1304, and the generation of the processed data is performed. And in step S1305, the generation of the authentication data is performed according to the generation of the processed data. In step S1306, the data with authentication, correlating the processed data generated in step S1304 with the authentication data generated in step S1305, is outputted.

The information processing apparatus is equipped with a authentication unit. Thereby, data, the authenticity of which cannot be verified, will not be processed. For example, as in Fig. 9, when the data a with authentication is inputted via the terminal 902, there is the possibility of falsification of the data in the terminal 902. In anticipation of such case, the information processing apparatus 903 is equipped with a authentication unit. This presents the falsified data from being processed. Additionally, even if deteriorated data is inputted into the processing information section 903, such data cannot be processed.

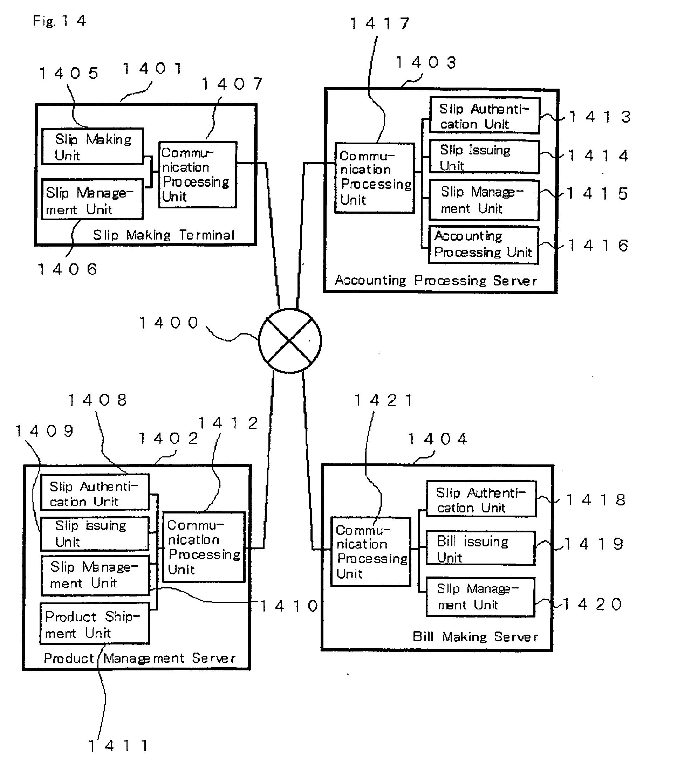

Moreover, as in Fig. 14, when the slip-writing terminal 1401, the product management server 1402, the accounting server 1403, and bill-writing server 1404, which are the information processing apparatuses, are connected via the communications network 1400, and the data is communicated among the information processing apparatuses, the data could become deteriorated due to communication failures, or when a party with malicious intent diverts unauthorized data. Even in such a case, verifying the data by the slip-authentication section 1408, the slip-section 1413, and the slip-authentication section 1418 as the authentication unit, prevents processing such data.

In addition, the sequence of processing in the slip issuing terminal 1401, the product management server 1402, the accounting server 1403, and bill- writing server 1404 is as follows. The slip-writing terminal 1401 issues the slip data to which the authentication data is granted, and transmits such data to the product management server 1402. The product management server 1402 confirms whether the authenticity of the slip data is affirmed or not due to the authentication data of the slip data transmitted from the slip- writing terminal 1401, and performs the process of shipment if affirmed. After completion of the process of shipment, the authentication data is granted, and such data is transmitted to the accounting server 1403. The accounting server 1403 confirms the authenticity of the slip through the authentication data of the slip data transmitted from the product management server 1402, and performs the accounting process if affirmed. After completion of the accounting process, the authentication data is granted, and such data is transmitted to the bill-writing server 1404. The bill-writing server 1404 determines whether the authenticity of the slip data is affirmed through the authentication data of the slip data transmitted from the accounting server 1403, and issues the bill for each customer if affirmed. In addition, the slip-writing terminal 1401, the product management server 1402, the accounting server 1403, and bill-writing server 1404 generate the authentication data by using common key cryptography held by each, and the confirmation of the authenticity through the authentication data may be performed by using a public key corresponding to the transmitters.

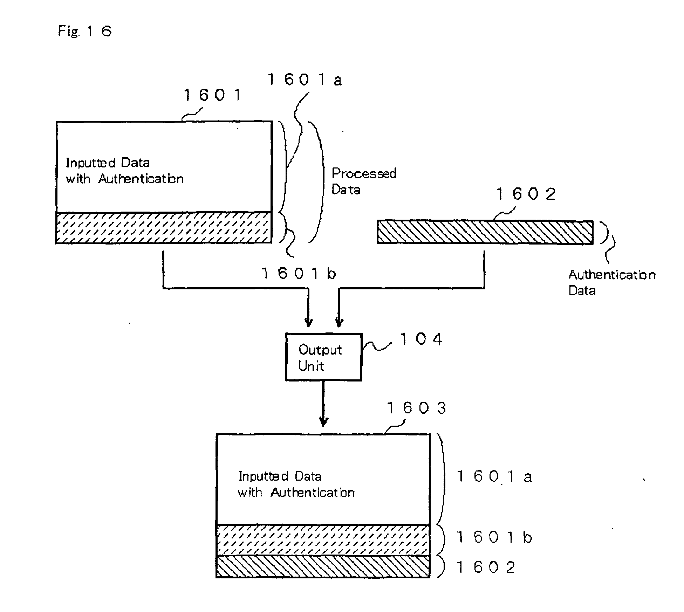

In embodiment 4, preferably, the processing section of the information processing apparatus in the preferred embodiments of the present invention 3 generates the processed data including the data with authentication inputted into the input unit. Therefore, the processed data generated by the processing section includes the data with authentication communicated from the input unit, and the data generated by processing the data with authentication. This situation is illustrated in Fig. 16. 1601 is the processed data that is generated by the processing unit, where there is data with authentication that is communicated and inputted from the input section in the part of the code 1601a, and the part of the code 1601b is the data generated by the processing unit. At this time, the authentication data generation section generates the authentication data 1602 for the entirety of the processed data 1601. The output section 104 outputs the data 1603 correlating the processed data 1601 with the authentication data 1602.

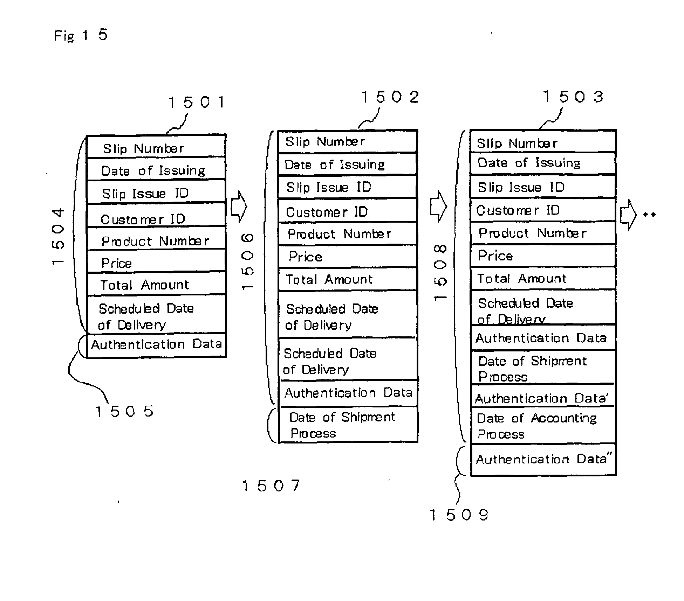

Fig. 15 indicates a more specific example. This example shows the data that is inputted and outputted among the information processing apparatuses shown in Fig. 14 by type. The data 1501 is the data outputted from the slip-issuing terminal 1401 as the information processing apparatus. Additionally, the part to which the code 1504 is attached is the processed data generated by the processing section of the slip-issuing terminal 1401. The part to which the code 1505 is granted is the authentication data generated by the authentication data generation unit. When the slip-issuing terminal 1401 outputs the data 1501 and inputs such data to the product management server 1402, the product management server 1402 performs the process for this, and outputs the data 1502. The part to which the code 1506 of the data 1502 is granted is the processed data generated by the processing section of the product management server 1402. The data 1501 resides in such part, without receiving any changes, and the data generated by the product management server 1402 is added to the lowest part as the "date of shipment process." The authentication data, generated according to generation of the processed data of the part to which the code 1506 is added, is added to the part to which the code 1507 is added. The product management server 1402 outputs the data 1502, and inputs such data into the accounting server 1403. The accounting server 1403 outputs the data 1503 for this. In the data 1503, the inputted data 1502 resides on the part to which the code 1508 is added, without receiving any changes. The data generated by the accounting server 1403 is added to the lowest part as the "date of accounting. " The authentication data 1509, generated according to the generation of the processed data of the part to which the code 1508 is added, is added to the part to which the code 1509 is added.

As such, the processed data including the authentication data, which the processing section inputs in the input unit, is generated. This enables the identification of the history of processes. If the authenticity of the data with authentication is not affirmed (Therefore, if the authenticity of the data with authentication is denied), the processes to where the authenticity is affirmed can be returned, and the process may be resumed therefrom. For example, the bill-issuing server 1404, which has received the data 1503 from the accounting server 1403, detects that the authenticity of the data 1503 by the authentication data has been denied. Then, the data 1502 is extracted from the part to which the code 1508 is added, and the authenticity of the data 1502 is determined by the authentication data 1507. If the authenticity is affirmed, the data 1502 may be inputted into the accounting server 1403. Thus, the issuance of the data 1501 is not started over again, and redundant procedures can be omitted. Moreover, it is useful that the number of communications in the communications network 1400 is kept low.

In the preferred embodiments of the present invention 3, or 4, the status-return information may be included in the processed data. The status-return information means the information necessary for a process for the data with authentication if the result of authentication by the authentication section does not affirm the authenticity of the data with authentication. "A process for the data with authentication if the result of authentication by the authentication section does not affirm the authenticity of the data with authentication" has the following meaning; for example, if data with authentication is not authentic, the data whose authenticity is guaranteed is extracted, and such data is transmitted into the information processing apparatus which performs the process. The process to request the analysis of the reasons why the authenticity has not been affirmed is applied. "The information necessary for a process for the data with authentication if authenticity is not affirmed" means the information necessary for a process with authentication if the authenticity is not affirmed. For example, the IP address, port number, or URL, for the purpose of transmitting the information processing apparatus, which extracts data, the authenticity of which is guaranteed and which is processed, apply. Alternatively, the program so as to transmit the data into such an information processing apparatus, or the URL, telephone number, electronic mail address, or program to perform a request for the party requesting the analysis of the reasons why the authenticity has not been affirmed, apply as the information necessary for the process of step S1303.

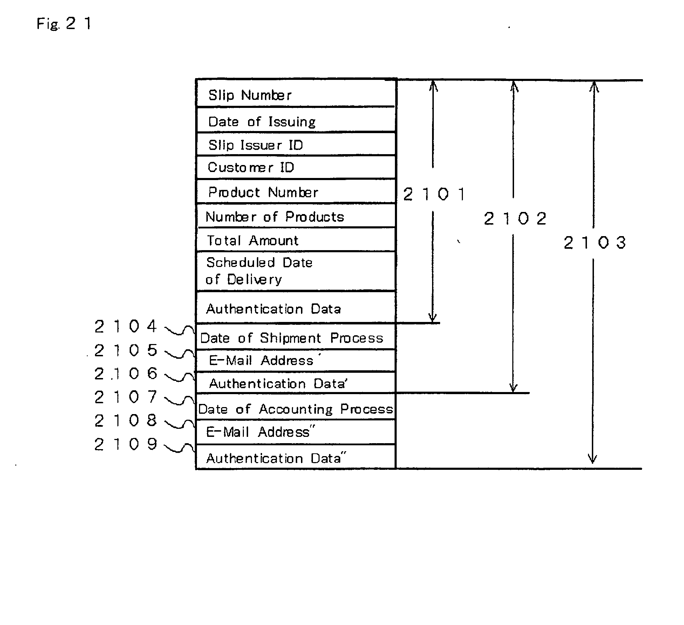

Fig. 21 explains a case where the status return information is included in the data that is inputted and outputted among the information processing apparatuses shown in Fig. 14. The parts shown in the scope of the code 2101 indicate the data that is inputted into the product management server by the slip issuing terminal 1401. The product management server adds the date of the shipment process 2104, electronic mail address 2105 as the status return information, and the authentication data 2106 to such data, and transmits the data shown in the scope of the code 2102 to the accounting server 1403. The accounting server 1403 adds the date of accounting 2107, the electronic mail address 2108 as the status return information, and the authentication data'2109, and transmits such data to the bill issuing server 1404.

If the slip authentication section 1418 of the bill-issuing server 1404 does not affirm the authenticity of the data within the scope of the code 2103, the bill issuing server 1404 extracts the data within the scope of the code 2102, and determines its authenticity. If the authenticity is affirmed here, the electronic mail address 2105 is used as the status return information, which performs a process. For example, the data is transmitted to the electronic mail address shown in the electronic mail address 2105. If the authenticity of the data within the scope of the code 2102 is not affirmed by the slip-authentication section 1418 of the bill-issuing server 1404, the data within the scope of the code 2101 is extracted and the authenticity is verified. When the status return information exists within the scope of the code 2101, the process is performed according thereto. When not, error-handling processes or other processes that have been determined in advance are performed.

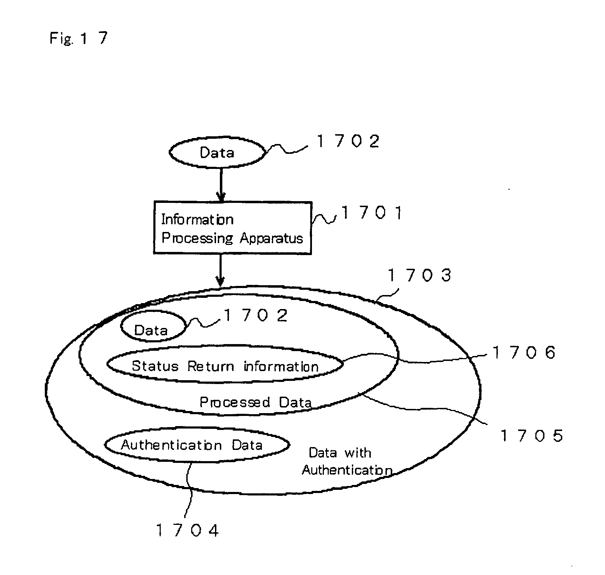

Fig. 17 shows the data with authentication outputted by which the data 1702 is inputted into the information processing apparatus 1701 in the preferred embodiments of the present invention by type. The outputted data with authentication 1703 is composed of the processed data 1705 and the authentication data 1704 so as to guarantee the authenticity of the processed data. The processed data 1705 is composed of the inputted data 1702 and the status-return information 1706. What should be noted here is that the status-return information 1706 will not be used when the authenticity of the processed data 1705 by the authentication data 1704 is not affirmed. That is, because the authenticity of the processed data 1705 is not affirmed, the authenticity of the status return information 1706 can also be denied. Therefore, when the status return information 1706 is used, the authenticity of the data with authentication including the data with authentication 1703 is not affirmed, and the authenticity of the data with authentication 1703 is guaranteed. Therefore, when the data with authentication 1703 is further inputted into a separate information processing apparatus X, the processed data including the data with authentication 1703 is generated, and the data with authentication correlated with the authentication data is outputted. It is then inputted into a separate information processing apparatus Y, and if the authenticity of the data with authentication inputted to Y is not affirmed, and the authenticity of the data with authentication 1703 extracted from such data with authentication is affirmed, the status return information 1706 is used.

In addition, when a situation where the authentication data to guarantee the authenticity of the status return information 1706 is included in the processed data 1705 is established, even if the authenticity of the processed data 1705 by the authentication data 1704 is not affirmed, if the authenticity of the status return information 1706 in the authentication data of the status return information 1706 is affirmed, it is possible to perform the process by using the status return information 1706.

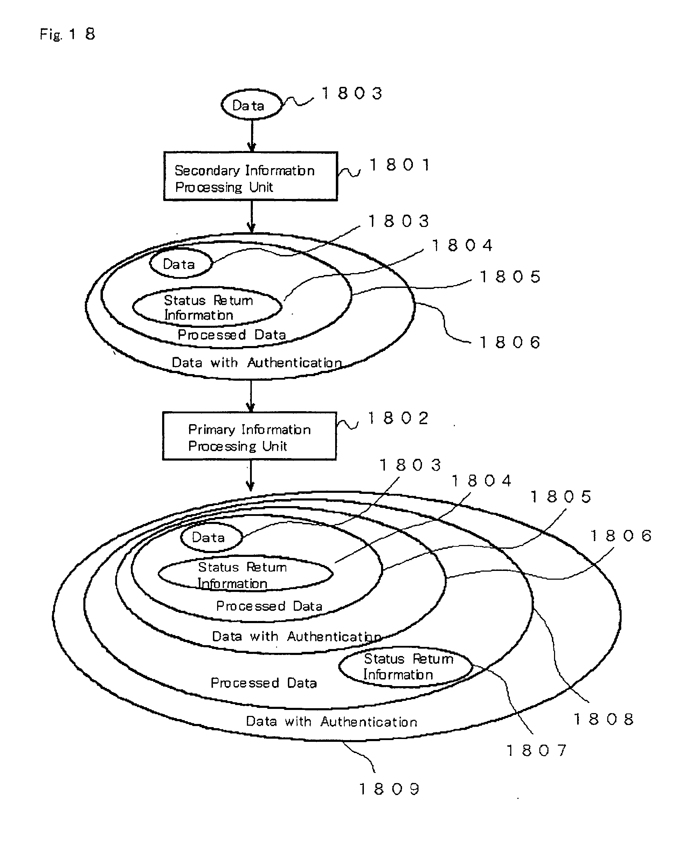

Fig. 18 explains the use of such status return information 1706. When the data 1803 is inputted into the secondary original information processing apparatus 1801 as an information processing apparatus, and the data with authentication 1806 is acquired, the data with authentication includes the processed data 1805, and the processed data 1805 includes the inputted data 1803 and the status return information 1804 (in order to simplify the figure, the authentication data is not illustrated). This data with authentication 1806 is further inputted into the primary original information processing apparatus 1802 as a separate information processing apparatus, and the data with authentication 1809 is outputted. The data with authentication includes the processed data 1808, and the processed data includes the status return information 1807 and the data with authentication 1806, which is inputted into the primary original information processing apparatus 1802. Hypothetically, such data with authentication 1809 is inputted into a separate information processing apparatus and the authenticity is not affirmed. Therefore, if the authenticity of the processed data 1808 is not affirmed, the information processing apparatus extracts the data with authentication 1806 included in the processed data 1808, and determines whether such authenticity is affirmed or not. If the authenticity is affirmed at this stage, status-return information 1804 is extracted and the process is performed by using status- return information 1804. For example, when the URL of the primary original information processing apparatus 1802 is included in the status-return information 1804, the data with authentication 1806 is transmitted into such URL, causing the primary original information processing apparatus 1802 to perform the process again. Alternatively, in order to research the reason why the authenticity of the data with authentication 1809 cannot be affirmed, the data with authentication 1809 is transmitted to the electronic mail address included in the status-return information 1804. Alternatively, transmission is made by performing a dial-up connection to a telephone number.

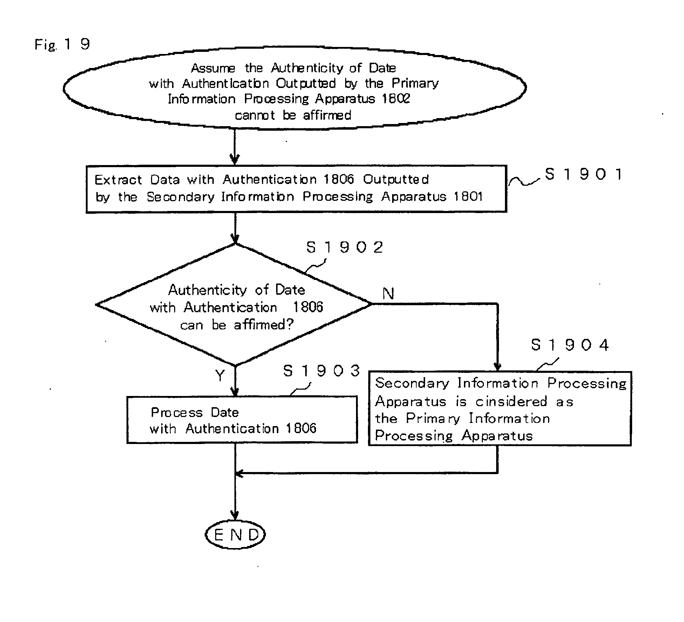

Fig. 19 is a flow chart illustrating the flow of the processes if the authenticity of the data with authentication 1809 outputted by the primary original information processing apparatus 1802 cannot be affirmed. In step S1901, the data with authentication 1806 outputted by the secondary original information processing apparatus 1801 is extracted from the data with authentication 1809.

In step S1902, whether or not the authenticity of the data with authentication 1806 can be affirmed is determined. If affirmed, such step is moved to step S1903, and the process for the data with authentication 1806 is undertaken. For example, the process is undertaken based on the status return information 1804 included in the data with authentication 1806.

If the authenticity of the data with authentication 1806 cannot be affirmed in step S1902, such step is moved to step S1904. The secondary original information processing apparatus is considered to be the primary original information processing apparatus, and the process is performed based thereupon. Therefore, the data 1803 is extracted, and the authenticity thereof is determined. If the data 1803 is not the data with authentication, the error is reported, or other processes that have been determined in advance are performed.

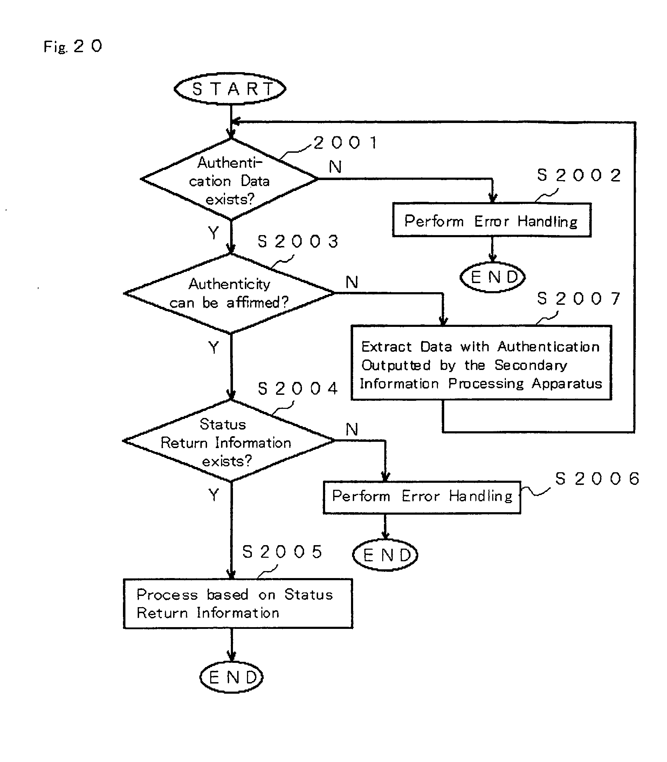

Fig. 20 shows more details than the flow chart in Fig. 19. This flow chart explains that the information processing apparatus in the present invention acquires the data with authentication, and the process, if such authenticity cannot be affirmed by the authentication unit, is explained.

In step S2001, it is determined whether the authentication data is included in the current data. In the flow chart of Fig. 20, if the authenticity is not affirmed, the data will be extracted from the processed data included in the data with authentication. Thus, there is a case where data without the authentication data might be extracted at the end. Thus, whether the authentication data exists or not is determined in step S2001. If no authentication data exists, such step is moved to step S2002, and error-handling is performed. In addition, instead of error-handling, other processes that have been determined in advance may be performed.

In step S2001, in case that the existence of the authentication data is affirmed, such step is moved to step S2003, and whether authenticity is affirmed or not is determined. If affirmed, such step is moved to step S2004, where whether or not the status return information exists is determined. When the status return information exists, such step is moved to'step S2005, and the process is made based on such status return information. In case that there is no status return information, such step is moved to step S2006, and the error-handling is performed. Moreover, instead of the error-handling, other processes that have been determined in advance may be performed.

In step 2003, in case that authenticity is not affirmed, such step is moved to step S2007, and the data with authentication outputted by the secondary original information processing apparatus from the current data is extracted, and the process goes back to step S2001 with such data as the current data.

Therefore, as explained with respect to the embodiments above, when there is a secondary original information processing apparatus which outputs the data with authentication for the primary original information processing apparatus outputting the data with authentication whose authenticity verified by the authentication section cannot be affirmed, the authentication of the data with authentication outputted by the secondary original information processing apparatus may be performed. Additionally, the expression "unit" in the "primary original information processing apparatus" and "secondary original information processing apparatus" means the section in such processes.

Moreover, in case that the result of the authentication for the data with authentication outputted by the secondary original information processing apparatus affirms the authenticity of the data with authentication, status return information may be the information used to perform the process of the data with authentication outputted by the secondary original information processing apparatus, based on the status return information included in the processed data of the secondary original information processing apparatus.

As.such, causing the status return information to be included in the processed data, and causing the information necessary for the process if the authenticity of data with authentication cannot be affirmed to be included enables dynamic designation of the contents of the process if the authenticity is not affirmed. This generates advantageous effects, especially in a case where the stages of processes are changed due to the data.

Additionally, the preferred embodiments of the present invention described above have shown the processes regarding slips and tickets as specific examples. However, they are not restricted thereto. As for other preferable uses where the authentication of the processes and data restoration (status restoration) disclosed herein should be performed, the following matters and matters other than such matters, etc. can be applied.

"Content Delivery Service" means a service delivering content via a network to users. In order to realize this service, a selling server to present a list of content that is sold to the users, an accounting server that performs accounting, a delivery server in charge of preserving the actual data of the content and the downloading thereof, are used on the systems that are dispersed and allocated on the network (contents delivery system).

In such a content delivery system, a list of contents with authentication data is transmitted to the terminals of the users by the selling server. When the users select the content, the result of such selection is transmitted to the accounting server as data with the authentication data that is added to the list of contents. Data showing that the accounting has been completed is transmitted to the delivery server from the accounting server as data with authentication. The delivery server can download the content after confirmation of completion of the accounting through performance of authentication is completed.

Additionally, using the status return information enables the performance of an appropriate process when an error occurs during any of the processes of the presentation of the list of contents, selection of contents, accounting, or downloading.

"Search Engine Clipping Service" means that the "Agent Program" circulates in a database that is dispersed and allocated on the network, performs a search by using an engine keyword, acquires the appropriate information, and merges, digests, and presents such information to the users.

Therefore, the Agent Program may add data acquired through searching one database for the data, which has been acquired up to that point, as the processed data, and may add the data with authentication thereto. Moreover, by adding the status-return information, when deterioration of the acquired data is found in the midst of circulation, the databases that should be recirculated can be detected. "Content Editing Service (Data Processing Service)" means causing every plurality of servers, which are assigned to a network, to share the functions, to implement special handling of the content and cause the content to be exchanged among such servers, which offers the desired handling of the content.

In order to implement such service, for example, the content is stored by the agent program, and the users present the specific kind of handling of the content to be implemented to the agent program. According to such presentation, the Agent Program moves among servers. At this time, in case that one server adds status return information to the result of the treatment of the content, even if deterioration of data is found during the movement of the Agent Program among servers, the Agent Program and servers can perform the process according to the deterioration, etc.

According to the present invention as mentioned above, first, in the information processing apparatus, the data with authentication correlating the processed data with the authentication data is outputted. The section acquiring the outputted data with authentication may confirm the authenticity of the processed data by the authentication data of the data with authentication. Thus, the structure is simplified, and also, the modularity of the section is enhanced. Such effect can be acquired even with processed data that shows the completion of the process in the same manner.

Secondly, the process can be performed in a multistage manner based on which the input section inputs the data with authentication.

Thirdly, the information processing apparatus is equipped with a authentication unit. This does not allow data to process the authenticity of which cannot be verified. For example, unauthentic data can be excluded due to falsification or deterioration, etc.

Fourthly, the processing section generates the processed data including the data with authentication inputted into the input unit. Through this, the history of the process is understood, and if the authenticity of the data with authentication is denied, the process up to the stage where the authenticity is affirmed can be returned to, and the process may be resumed therefrom. Thus, there is no redundant process of starting from the beginning. Moreover, redundant communications will be decreased.

Fifthly, the status return information is included in the processed data, and the information necessary for the process if the authenticity of the data with authentication is not affirmed is included therein. This enables the dynamic designation of the content of the process if the authenticity is not affirmed. This generates advantageous effects especially when the stages of the process are changed by data.

## Claims

1. An information processing apparatus comprising:
an input section for inputting data,
a processing section processing the inputted data and generating the processed data,
an authentication data generation section generating the authentication data according to the generation of the processed data in the processing unit, in which the authentication data is used for guaranteeing the authenticity of the processed data, and
an output section for outputting the data with authentication, a data correlating the processed data with the authentication data.

2. The information processing apparatus as defined in claim 1, wherein the processed data corresponds to the data indicating the completion of the process in the processing unit.

3. The information processing apparatus as defined in claim 1, wherein the input section inputs the data with authentication as the data.

4. The information processing apparatus as defined in claim 3 comprising an authentication section verifying the authenticity of the inputted data with authentication based on the authentication data of the data with authentication that is inputted into the input unit.

5. The information processing apparatus as defined in claim 4 wherein the processing section generates the processed data including the data with authentication that is inputted into the input unit.

6. The information processing apparatus as defined in either claim 4 or 5 wherein the processed data including the status return information that is necessary for the process of the data with authentication in cases where the result of the authentication in the authentication section does not affirm the authenticity of the data with authentication.

7. The information processing apparatus as defined in claim 6 wherein the authentication section verifies the data with authentication that is outputted by the secondary original information processing apparatus, in cases where there exists a secondary original information processing apparatus that has outputted the data with authentication into the primary original information processing apparatus that has outputted the data with authentication, the authenticity of which cannot be affirmed by the authentication unit.

8. The information processing apparatus as defined in claim 7 wherein the status return information corresponds to the information for processing the data with the authentication that has been outputted by the secondary original information processing apparatus, in which said processing is based on the status return information included in the processed data of the secondary original information processing apparatus, in cases where the result of the authentication for the data with authentication that has been outputted by the secondary original information processing apparatus affirms the authenticity of the data with authentication.

9. The information processing apparatus as defined in any one of claims 6 to 8 wherein the status return information includes one or more of the URL, telephone number, e-mail address, or program necessary for a process of the data with authentication, the authenticity of which has not been affirmed.

10. An information processing program to cause a computer to execute the following steps:
an input step of acquiring inputted data,
a processing step of processing the acquired data by the input step and of generating processed data,
an authentication data generation step of generating the authentication data according to the generation of the processed data in the processing step, in which the authentication data is used for the guarantee of the authenticity of the processed data, and
an output step of outputting the data with authentication wherein the processed data is correlated with the authentication data.

11. An information processing method comprising the following steps:
an input step of acquiring inputted data,
a processing step of processing the acquired data in the input step and of generating processed data,
an authentication data generation step of generating the authentication data according to the generation of the processed data in the processing step, in which the authentication data is used for the guarantee of the authenticity of the processed data, and
an output step of outputting the data with authentication wherein the processed data is correlated with the authentication data.
